Europäisches Patentamt

European Patent Office

Office européen des brevets

(11) Veröffentlichungsnummer : **0 379 869 B1**

(12) # EUROPÄISCHE PATENTSCHRIFT

(45) Veröffentlichungstag der Patentschrift :
**03.06.92 Patentblatt 92/23**

(51) Int. Cl.$^5$ : **F16C 43/06,** F16C 33/46,
F16C 19/44

(21) Anmeldenummer : **90100197.4**

(22) Anmeldetag : **05.01.90**

(54) **Radial-Wälzlager.**

(30) Priorität : **26.01.89 DE 3902194**

(43) Veröffentlichungstag der Anmeldung :
**01.08.90 Patentblatt 90/31**

(45) Bekanntmachung des Hinweises auf die
Patenterteilung :
**03.06.92 Patentblatt 92/23**

(84) Benannte Vertragsstaaten :
**DE ES FR GB IT**

(56) Entgegenhaltungen :
**DE-A- 1 675 042**
**DE-A- 3 404 200**

(56) Entgegenhaltungen :
**DE-C- 349 841**
**FR-A- 781 735**
**FR-A- 2 146 837**
**FR-A- 2 147 658**
**FR-A- 2 467 319**

(73) Patentinhaber : **INA Wälzlager Schaeffler KG**
**Industriestrasse 1-3 Postfach 1220**
**W-8522 Herzogenaurach (DE)**

(72) Erfinder : **Radinger, Norbert**
**Zähringerstrasse 42a**
**W-8500 Nürnberg (DE)**
Erfinder : **Steinberger, Wolfgang, Dipl.-Ing.**
**(FH)**
**Von-Hauck-Strasse 30**
**W-8522 Herzogenaurach (DE)**

## Beschreibung

Die Erfindung betrifft ein Radial-Wälzlager mit einem äußeren Laufring, der wenigstens einen radialen Bord aufweist, welcher in eine Umfangsnut eines Käfigs eingreift, die zumindest einseitig durch einen radialen mit dem Käfig verbundenen Rand begrenzt ist, wobei in dem Käfig in Taschen angeordnete Wälzkörper untergebracht sind.

Derartige Radial-Wälzlager sind beispielsweise aus der FR-A-24 67 319 bekannt, wobei der radiale Bord zwischen einem radialen Rand des Käfigs und den Stirnflächen zylindrischer Wälzkörper angeordnet ist. Diese Radial-Wälzlager erfüllen dann ihren Zweck, wenn an die Käfige keine hohen Steifigkeitsanforderungen gestellt werden. Liegt jedoch eine solche Anforderung vor, wird in der Regel an beiden Käfigenden ein Stirnring vorgesehen, was zur Folge hat, daß derartige Käfige nur montiert werden können, wenn nach dem Einsetzen des Käfigs in den Laufring ein Stirnring oder ein Laufringbord nachträglich angeformt wird. Der Montageaufwand ist in diesem Fall unwirtschaftlich.

Darüber hinaus sind aus der FR-A-21 47 658 und der FR-A-21 46 837 Radial-Wälzlager bekannt, bei denen der Käfig in einer nicht der Einbaulage entsprechenden Lage in den Außenring einsetzbar ist. Dazu wird der Käfig zur Lagerachse verdreht oder verkippt, anschließend durch entsprechend geformte Öffnungen in den Laufring eingesetzt, dort ausgerichtet und mit Wälzkörpern bestückt. Mit diesen Lagern ist eine einfach herzustellende und billig zu montierende Lösung gefunden, die allerdings nur bei axial kurzbauenden Käfigen angewendet werden kann. Des weiteren sind bei diesen Lagern an den Laufringen beidseitig Borde vorgesehen, was in bestimmten Anwendungsfällen mit dem Nachteil verbunden ist, daß nur eine relativ geringe Schmierstoffmenge das Lager durchströmen kann und daß durch die Borde im Schmierstoff mitgeführte Verunreinigungen im Lager zurückgehalten werden. Andererseits ist es aufgrund der beiderseitigen Borde nur bedingt möglich, am Außenumfang des Laufringes einstückig mit diesem verbundene Anschläge anzuformen.

Die Aufgabe der Erfindung besteht darin, ein Radial-Wälzlager zu schaffen, das einen guten Schmierstoffdurchfluß gewährleistet, bei dem am Außenumfang ein mit dem Laufring einstückig verbundener Anschlag vorgesehen sein kann und daß auch bei langbauenden Käfigen einfach montierbar ist.

Diese Aufgabe wird dadurch gelöst, daß der zur Lagerachse gerichtete Rand des Bordes eine exzentrisch zur Lagerachse versetzte Öffnung frei läßt, durch die der Käfig radial zur Lagerachse versetzt durch Parallelverschiebung axial in den Laufring einsetzbar ist.

Damit ist bei den genannten Radial-Wälzlagern eine einfache Montagemöglichkeit auch für axial langbauende Käfige geschaffen, indem der zunächst nicht mit Wälzkörpern bestückte Käfig achsparallel radial versetzt in axialer Richtung in den Laufring eingeschoben und dort mit Wälzkörpern bestückt wird, wobei sich der Käfig zentrisch zur Lagerachse ausrichtet und ein Eingriff des radialen Bordes in die Umfangsnut zustandekommt, womit der Käfig in beiden axialen Richtungen festgelegt ist. Folglich kann ein Bord am Laufring entfallen, so daß das Schmieröl ungehindert aus dem Lager austreten kann, ohne daß Verunreinigungen im Lager zurückgehalten würden. Gleichzeitig kann anstelle des zweiten Bordes am Außenumfang des Laufringes ein mit diesem einstückig verbundener Anschlag vorgesehen sein.

In bevorzugten Ausführungsformen der Erfindung ist in einer ersten Variante die Umfangsnut des Käfigs einerseits durch einen radialen, mit dem Käfig verbundenen Rand und andererseits durch die Wälzkörper begrenzt, während in einer zweiten Variante die Umfangsnut durch zwei mit dem Käfig verbundene Ränder gebildet ist.

Weitere Ausgestaltungen der Erfindung sehen vor, daß sich der radiale Bord nur über einen Teil des Umfanges des Laufringes erstreckt, wobei der Bord entweder eine zur Lagerachse exzentrische Bohrung begrenzt, deren Durchmesser geringfügig größer ist als der Außendurchmesser des Käfigs, oder als zungenförmiges Teil ausgebildet ist. Fertigungstechnisch bedingt sind auch solche Ausführungsformen vorgesehen, bei denen sich der radiale Bord über den gesamten Umfang des Laufringes erstreckt und dennoch eine exzentrische Bohrung begrenzt.

In den genannten Ausführungen ist der Käfig aus Blech hergestellt und spanlos umgeformt.

Die Erfindung wird im folgenden anhand einiger Ausführungsbeispiele erläutert. Es zeigen:

Die Figuren 1 und 2 einen Längsschnitt durch ein erfindungsgemäßes Radial-Wälzlager und

die Figuren 3 und 4 eine stirnseitige Ansicht der Radial-Wälzlager nach den Figuren 1 bzw. 2.

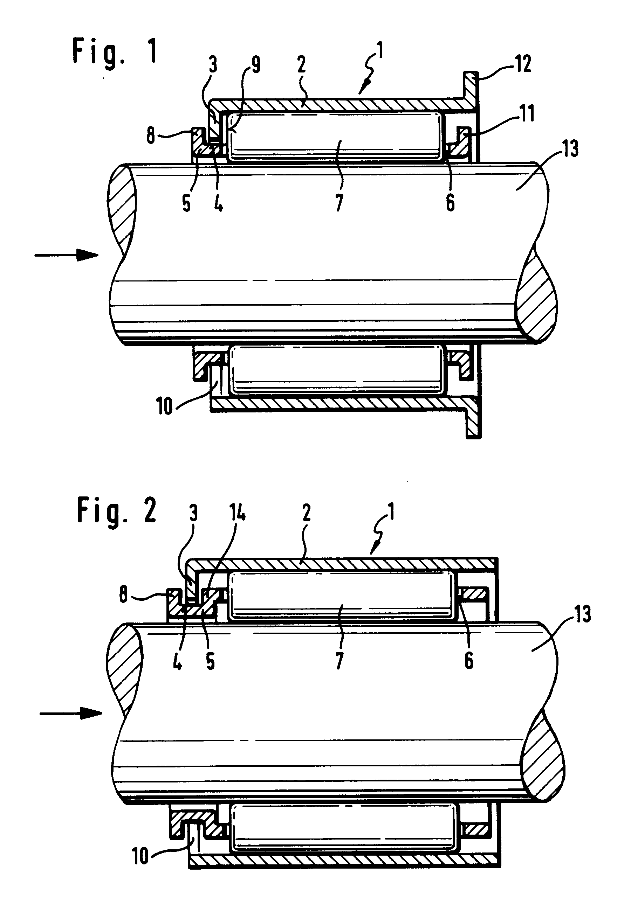

In Figur 1 ist ein Radial-Wälzlager 1 dargestellt, bei dem ein äußerer Laufring 2 einen radialen Bord 3 aufweist, der in eine Umfangsnut 4 eines Käfigs 5 eingreift, in dem in Taschen 6 angeordnete Wälzkörper 7 untergebracht sind. Die Umfangsnut 4 ist einerseits durch den radialen Rand 8 des Käfigs 5 und andererseits durch die Wälzkörper 7, in diesem Fall insbesondere die Stirnflächen 9 der zylindrisch ausgebildeten Wälzkörper 7 begrenzt. Der radiale Bord 3 rahmt eine Öffnung 10 ein, die exzentrisch zur Lagerachse angeordnet ist, so daß zur Montage der nicht mit Wälzkörpern 7 bestückte Käfig 5 zunächst radial versetzt zur Lagerachse durch Parallelverschiebung in axialer Richtung in den Laufring eingesetzt und dort mit Wälzkörpern 7 radial von innen

2

nach außen bestückt wird. Mit dem Einsetzen der Wälzkörper 7 in die Taschen 6 des Käfigs 5 richtet sich dieser zentrisch zur Lagerachse aus, womit der radiale Bord 3 in Eingriff mit der Umfangsnut 4 kommt und der Käfig 5 in beiden axialen Richtungen festgelegt ist. Der Käfig 5 weist an seinem vom Bord abgewandten axialen Ende einen Verstärkungsstirnring 11 auf, der der Erhöhung der Käfigsteifigkeit dient. Zur Verbesserung des Schmieröldurchflusses ist nur der eine radiale Bord 3 vorgesehen, wobei es aufgrund des entfallenen zweiten Bordes möglich ist am Außenumfang des Laufringes 2 einen einstückig an diesen angeformten Anschlag 12 vorzusehen. Der Vollständigkeit halber ist darüberhinaus die zu lagernde Welle 13 dargestellt.

Figur 2 zeigt ein Radial-Wälzlager 1, bei dem der Käfig 5 eine Umfangsnut 4 aufweist, die beiderseits durch einstückig mit dem Käfig 5 verbundene Ränder 8, 14 begrenzt und durch spanlose Umformung des aus Blech bestehenden Käfigs 5 erzeugt ist.

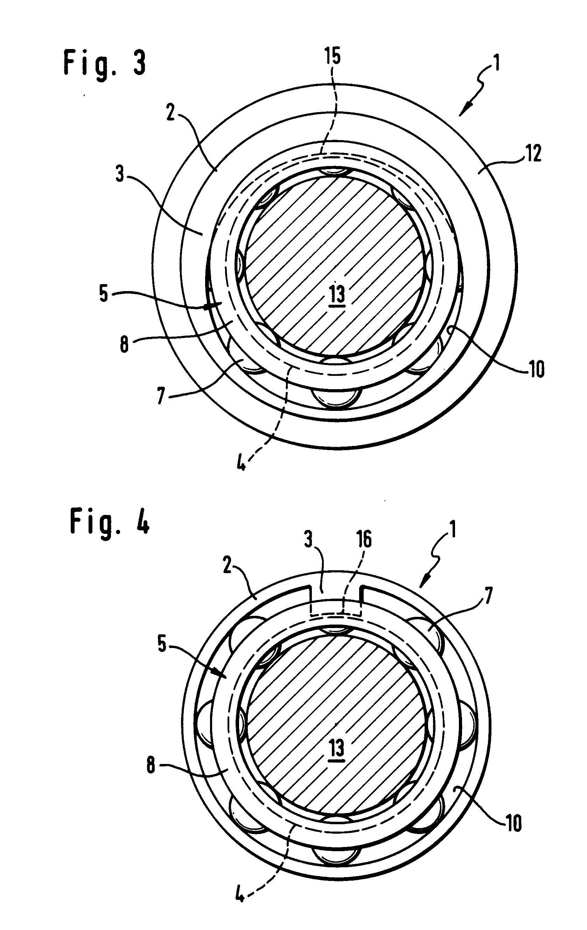

Figur 3 zeigt eine Ansicht des Radial-Wälzlagers 1 nach Figur 1. Die gestrichelte Linie 15 deutet die Überdeckung des radialen Bordes 3 mit dem Rand 8 der Umfangsnut 4 im Käfig 5 an. In der Darstellung wird deutlich, daß die Öffnung 10 als exzentrische Bohrung ausgeführt ist und sich der radiale Bord 3 nur über einen Teil des Umfanges des Laufringes 2 erstreckt.

Figur 4 zeigt eine Ansicht eines Radial-Wälzlagers 1 nach der Figur 2, welches nach dem genannten Prinzip aufgebaut und montiert wird, jedoch alternativ zu den vorgenannten Ausführungsbeispielen einen zungenförmig ausgebildeten Bord 3 aufweist. Die gestrichelte Linie 16 stellt auch hier die Überdeckung des radialen Bordes 3 mit dem Rand 8 des Käfigs 5 dar.

Es ist darüberhinaus möglich, die Ausführungen nach den Figuren 2 bzw. 4 ebenfalls mit einem am Außenumfang des Laufringes 2 angeordneten Anschlag zu versehen.

## Patentansprüche

1. Radial-Wälzlager mit einem äußeren Laufring (2), der wenigstens einen radialen Bord (3) aufweist, welcher in eine Umfangsnut (4) eines Käfigs (5) eingreift, die zumindest einseitig durch einen radialen mit dem Käfig (5) verbundenen Rand (8) begrenzt ist, wobei in dem Käfig (5) in Taschen (6) angeordnete Wälzköper (7) untergebracht sind, **dadurch gekennzeichnet,** daß der zur Lagerachse gerichtete Rand des Bordes (3) eine exzentrisch zur Lagerachse versetzte Öffnung (10) freiläßt, durch die der Käfig (5) radial zur Lagerachse versetzt durch Parallelverschiebung axial in den Laufring (2) einsetzbar ist.

2. Radial-Wälzlager nach Anspruch 1, **dadurch gekennzeichnet,** daß die Umfangsnut (4) in einer axialen Richtung durch einen radialen, mit dem Käfig (5) verbundenen Rand (8) und in der anderen axialen Richtung durch die Wälzkörper (7) begrenzt ist.

3. Radial-Wälzlager nach Anspruch 1, **dadurch gekennzeichnet**, daß die Umfangsnut (4) in beiden axialen Richtungen durch mit dem Käfig (5) verbundene Ränder (8, 14) begrenzt ist.

4. Radial-Wälzlager nach Anspruch 2 oder 3, **dadurch gekennzeichnet**, daß der radiale Bord (3) eine exzentrisch zur Lagerachse angeordnete Bohrung begrenzt.

5. Radial-Wälzlager nach Anspruch 2 oder 3, **dadurch gekennzeichnet,** daß der Bord (3) zungenförmig ausgebildet ist.

6. Radial-Wälzlager nach einem der Ansprüche 1 bis 5, **dadurch gekennzeichnet,** daß der Käfig (5) aus Blech besteht und durch spanlose Umformung hergestellt ist.

## Claims

1. Radial rolling bearing with an outer race ring (2) comprising at least one radial flange (3) which engages into a peripheral groove (4) of a cage (5), the peripheral groove being delimited at least on one side by a radial rim (8) connected with the cage (5) and rolling elements (7) being lodged in pockets (6) in the cage (5), characterized in that the edge of the flange (3) directed towards the bearing axis defines an opening (10) which is eccentrically offset with regard to the bearing axis and through which the cage (5) can be inserted axially into the race ring (2), radially offset relative to the bearing axis by parallel displacement.

2. Radial rolling bearing according to claim 1, characterized in that the peripheral groove (4) is delimited in one axial direction by a radial rim (8) connected with the cage (5) and in the other axial direction by the rolling elements (7).

3. Radial rolling bearing according to claim 1, characterized in that the peripheral groove (4) is delimited in both axial directions by rims (8, 14) connected with the cage (5).

4. Radial rolling bearing according to claim 2 or 3, characterized in that the radial flange (3) defines a bore arranged eccentric to the bearing axis.

5. Radial rolling bearing according to claim 2 or 3, characterized in that the flange (3) is tongue-shaped.

6. Radial rolling bearing according to one of the claims 1 to 5, characterized in that the cage (5) is made by shaping of sheet metal without chip removal.

**Revendications**

1. Roulement radial avec une bague de roulement extérieure (2) comprenant au moins un rebord radial (3) qui s'engage dans une gorge périphérique (4) d'une cage (5), la gorge (4) étant délimitée au moins d'un côté par un collet radial (8) relié à la cage (5), des rouleaux (7) disposés dans des poches (6) étant logés dans la cage (5), caractérisé en ce que le bord du rebord (3) orienté vers l'axe du roulement délimite une ouverture (10) qui est excentrée par rapport à l'axe du roulement à travers laquelle la cage (5) décalée radialement par rapport à l'axe du roulement, peut être insérée dans la bague de roulement (2) par translation axiale.

2. Roulement radial selon la revendication 1, caractérisé en ce que la gorge périphérique (4) est délimitée dans l'une des directions axiales par un collet radial (8) relié à la cage (5), et dans l'autre direction axiale, par les rouleaux (7).

3. Roulement radial selon la revendication 1, caractérisé en ce que la gorge périphérique (4) est délimitée dans les deux directions axiales par des collets (8, 14) reliés à la cage (5),

4. Roulement radial selon la revendication 2 ou 3, caractérisé en ce que le rebord radial (3) délimite un alésage qui est agencé excentriquement par rapport à l'axe du roulement.

5. Roulement radial selon la revendication 2 ou 3, caractérisé en ce que le rebord (3) est configuré sous une forme de languette.

6. Roulement radial selon une des revendications 1 à 5, caractérisé en ce que la cage (5) est réalisée en tôle par formage sans enlèvement de copeaux.

Fig. 1

Fig. 2

Fig. 3

Fig. 4